# EUROPEAN PATENT SPECIFICATION

(11) **EP 3 063 022 B1**
(45) Date of publication and mention of the grant of the patent: **15.05.2019**
(21) Application number: 14789417.4
(22) Date of filing: 21.10.2014
(51) Int. Cl.: B60C 11/24

(54) **METHOD FOR DETECTING THE WEAR OF THE TREAD BAND OF A TYRE AND TYRE PROVIDED WITH A TREAD BAND WEAR INDICATOR**
VERFAHREN ZUR ERKENNUNG DES VERSCHLEISSES EINER REIFENLAUFFLÄCHE UND REIFEN MIT EINER LAUFFLÄCHENVERSCHLEISSANZEIGE
PROCÉDÉ POUR DÉTECTER L'USURE DE LA BANDE DE ROULEMENT D'UN PNEUMATIQUE ET PNEUMATIQUE COMPORTANT UN TÉMOIN D'USURE DE BANDE DE ROULEMENT

(30) Priority: 28.10.2013 IT RM20130594
(43) Date of publication of application: 07.09.2016
(73) Proprietor: Pirelli Tyre S.p.A., 20126 Milano (IT)
(72) Inventor: CASTELLINI, Alessandro, I-20126 Milano (IT)
(74) Representative: Fabiano, Piero
(86) International application number: PCT/IB2014/065501
(87) International publication number: WO 2015/063652

(56) References cited:
- WO-A1-00/66372
- JP-A- 2000 289 414
- JP-A- 2012 218 511
- JP-U- S 626 114

## Description

### FIELD OF THE INVENTION

The present invention relates to a method for detecting the wear of the tread band of a tyre and to a tyre provided with a tread band wear indicator usually know under the English acronym TWI (Tread Wear Indicator). Preferably, the present invention applies to a tyre for wheels of heavy load vehicles.

### PRIOR ART

Documents EP1524131, WO2011073575, EP1705034, US20110079333, US20120103484, JP 2000 289414 A, JP S62 6114 U, WO 00/66372 A1 and JP 2012 218511 A relate to wear indicators for the tread band of tyres.

### SUMMARY OF THE INVENTION

The wear of the tread band of a tyre modifies the geometric features of the tread band and thereby the comfort and the drivability and safety features of the tyre. Generally, wear speed and/or unevenness of the tread band tend to reduce the tyre duration.

An excessive or anomalous wear may appear through noise and vibrations increase and may be caused by wrong or not optimal use conditions, such as, for example, an incorrect tyre inflation pressure and/or a driving style with abrupt acceleration and braking, which imposes an excessive stress on tyres.

The Applicant has noticed that, when using a tyre, it may be convenient to be able to visually examining the occurrence of tread wear, either widespread or uneven. In particular, it may be convenient to be able to quickly inspect the tyre for assessing, at any time, the kind and actual extent of wear affecting one or more tread portions.

An inspection which is quick but also accurate and easy to be carried out allows evaluating and/or implementing corrective actions, such as for example checking more frequently the tyre pressure, providing the driver of the motor vehicle with instructions about correct driving and having them respected, carrying out mechanical checks on the vehicle, such as checking suspensions and shock-absorbers, programming the periodical change of position of the tyres (rotation). The Applicant has supposed that, if one can restrict the wear detection to one or more regions of limited extension, more precise information can be obtained about how the tyre is used and the possible remedial actions to be taken.

The Applicant has noticed that a localized check of the tread wear which can be carried out quickly, for example during a stop of the motor vehicle, could provide indications also in a design/manufacturing step of a new tread pattern.

Obtaining qualitative and quantitative data about the tread wear, in fact, would allow the designer to possibly intervene with subsequent adjustments on the tread pattern.

The subsequent adjustments based on the results of tests and evaluation trials, in fact, could be aimed at the optimization of the target features in terms of the performance that is to be achieved with the tyre.

Typically, for detecting the wear of the tread, for example "indoor" and "outdoor" tests are used.

In both kind of tests, after a predetermined mileage of some thousands kilometres, or after a predetermined travelling time of some weeks, the tyre to be evaluated is removed from the axle of the vehicle, and possibly form the rim, and the tread profile is measured for example by means of a laser scanning measurement (indoor test) or by a comparative measurement of the residual depth of a groove of the worn tread band compared to a new tread band.

However, the Applicant has noticed that these tests and the related measurement methods are extremely time-consuming, burdensome under the operational point of view and require specific equipment to be carried out.

Furthermore, in connection with tyres for heavy load vehicles, the Applicant has noticed that a critical phenomenon of irregular wear is the so-called "saw-tooth" wear, which usually affects the outer profile of circumferentially adjacent blocks, such as for example blocks belonging to the same circumferential row and particularly to circumferentially adjacent pairs of blocks of the same row or to circumferentially adjacent pairs of blocks which are possibly staggered relative to a circumferential direction.

In tyres affected by this kind of wear it can be observed that, at a transverse groove which separates two circumferentially adjacent blocks, the first block entering in the footprint area according to the tyre rolling direction may have, near the transverse groove, a noticeably greater wear as compared to that of the portion near the same transverse groove of the second block.

The irregular profile created between two adjacent blocks and/or along the external perimeter of the tyre profile reminds to small saw teeth. Hence the name of this kind of wear.

Besides causing noise and vibrations, this kind of wear rapidly reduces the performance of the tyre, because an unevenly worn tyre may respond anomalously and unpredictably to stresses.

For reducing this kind of wear it is possible to intervene during a development step of the product, i.e. during a design step.

For tyres for heavy load vehicles it can thus be advantageous to be able to quickly examine, during use as well as in a design/manufacturing step of a new tread pattern, the effects on the tread wear of performance tests and evaluation trials, so as to be able to possibly carry out subsequent adjustments in the tread pattern.

The Applicant has thus faced the problem of finding a tread band wear indicator and a method for detecting the wear of the tread band which can be used on all kinds of tyres, particularly on tyres for heavy load vehicles, and allow a quick and intuitive evaluation of the wear affecting a tread portion after a predetermined mileage, both in qualitative (wear profile) and quantitative (amount of the portion of removed rubber) terms.

The Applicant has also faced the problem of finding a tread band wear indicator and a method for detecting the wear of the tread band which is not affected by the drawbacks of the known methods, which can be effectively used when a tyre is being used as well as in a design step of new tread pattern.

The Applicant has found that by forming a graduated scale directly on the tyre, particularly on a wall of a groove and/or of an edge of at least one tread band portion, it is possible to immediately and precisely detect the wear of the tread band profile both in qualitative and quantitative terms, directly without removing the tyre from the rim.

The Applicant has also found that by locating two of the aforementioned graduated scales in a predetermined position relative to at least one transverse groove which two circumferentially adjacent blocks face, it is possible to detect the impact and criticality of saw-tooth wear directly with an "outdoor" test, without removing the wheel comprising the tyre from the axle on which it is mounted and/or without removing the tyre from the rim.

According to a first aspect thereof, the present invention relates to a method for detecting the wear of the radially outer profile of at least one tread band portion of a tyre for vehicle wheels according to claim 8.

Preferably, visually detecting the wear difference of the outer profile of a pair of circumferentially adjacent blocks comprises:
- counting the difference in the number of notches which are present in the wear indicators located on said circumferential groove or on said tread band edge delimiting each block of said pair of circumferentially adjacent blocks.

According to a further aspect thereof, the present invention relates to a tyre according to claim 1.
- By "circumferential" direction it is meant a direction generically directed according to the rotation direction of the tyre, or in any case only slightly inclined relative to the rotation direction of the tyre.
- By "axial" direction or "axially" it is meant a direction parallel to, or in any case only slightly inclined relative to the rotation axis of the tyre.
- By "radial" direction or "radially" it is meant a direction generically directed away from the rotation axis of the tyre.
- By tyre module it is meant the combination of grooves and rubber portions arranged so as to form a pattern on the tread band which is repeated substantially the same without interruption along the circumferential development of the tread band. Along the circumferential development of the tread band, the modules may have different circumferential lengths.

The present invention, in the aforementioned aspects, may comprise at least one of the preferred features hereinafter described.

Preferably, the notches are spaced apart radially by a distance of between about 0,4 mm and about 2 mm.

Advantageously, said distance is substantially constant and identifies a pitch, so that a number of notches can be easily associated with a corresponding metrical value.

Advantageously, the notches have section maximum width of between about 0,2 mm and about 1 mm.

Conveniently, the notches have a depth of between about 0,3 mm and about 1,6 mm.

The present choice in terms of depth and width of the notches represents a suitable trade-off between the need of making the notches easily visible and not too easily removable and the need of avoiding an excessive structural weakening of the wall of the tread band portion on which they are located.

Advantageously, the notches have a substantially constant section along their extension.

Preferably, the tread band wear indicator comprises groups of notches, in which the notches extend in a direction substantially perpendicular to the radial direction, alternated with a notch of greater extension.

Advantageously, the notches have an extension in a direction substantially perpendicular to the radial direction equal to or greater than 5 mm. Conveniently, the group of notches have the same number of notches. Preferably, the tread band portion comprises at least one circumferential groove. Advantageously, the tread band indicator has a module cyclically repeated along the circumferential development of the tyre, and within a same module a plurality of pairs of tread band wear indicators are present, each located at a transverse groove.

### BRIEF DESCRIPTION OF THE DRAWINGS

Further features and advantages of the invention are presented hereinafter with reference to embodiments shown as non-limiting examples in the accompanying figures, wherein:
- Fig. 1 shows a lateral view of a portion of a pair of circumferentially adjacent blocks, wherein a pair of tread band wear indicators is located on a portion of a circumferential groove defining the blocks;
- Fig. 2 shows a sectional view along axis A-A in figure 1 of a block comprising a tread band wear indicator;
- Fig. 3 shows a perspective view of a portion of tread band of a tyre for heavy load vehicles comprising a plurality of tread band wear indicators; and
- Fig. 4 shows a sectional view of a tyre for heavy load vehicles to which at least one tread band wear indicator can be applied.

### DETAILED DESCRIPTION OF EMBODIMENTS OF THE INVENTION

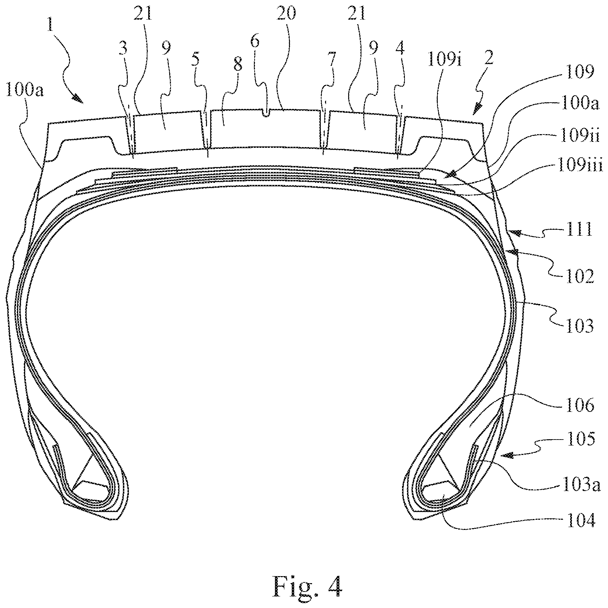

In figure 4 a tyre for vehicle wheels, in particular a tyre intended to be mounted on traction or steer axle wheels of a heavy load vehicle, is generally indicated at 1.

In the following description, by the expression: "heavy load vehicle" it is meant a vehicle belonging to classes M2-M3, N2-N3 and O2∼O4 defined in "Consolidated Resolution of the Construction of Vehicles (R.E.3) (1997)", Annex 7, pages 52-59, "Classification and definition of power-driven vehicles and trailers", such as for example trucks, lorries, tractors, busses, vans and other vehicles of this kind.

The tyre 1 comprises a carcass structure 102, including at least one carcass ply 103, preferably two carcass plies 103, formed by reinforcing cords, typically made of metal, incorporated into an elastomeric matrix.

The carcass ply 103 has opposite end edges 103a engaged with respective bead rings 104. The latter are located in regions 105 of the tyre 1 usually called "beads".

An elastomeric filling 106 taking up the space defined between the carcass ply 103 and the respective end edge 103a of the carcass ply 103 is applied onto the outer perimeter edge of the bead rings 104. The bead rings 104 hold the tyre 1 firmly fixed to an anchoring seat provided for this purpose in the wheel rim, thus preventing the bead 105 from coming out from such a seat during operation.

At the beads 105 specific reinforcing structures (not shown) may be provided, which have the function of improving the torque transmission to the tyre 1.

In a radially outer position relative to the carcass structure 102 a belt structure 109 is provided, which preferably comprises several belt layers (three layers 109i, 109ii, 109iii are shown in this specific example) arranged radially one on top of the other and having reinforcing cords, typically made of metal, with a crossed orientation and/or substantially parallel to the direction of circumferential development of the tyre 1.

A tread band 2, made as well of an elastomeric material, is applied in a radially outer position relative to the belt structure 109.

On the lateral surfaces of the carcass structure 102 respective sidewalls 111 made of an elastomeric material are further applied, each extending from one of the opposite lateral edges 100a of the tread band 2 up to the respective annular structure 104 for anchoring to the beads 105.

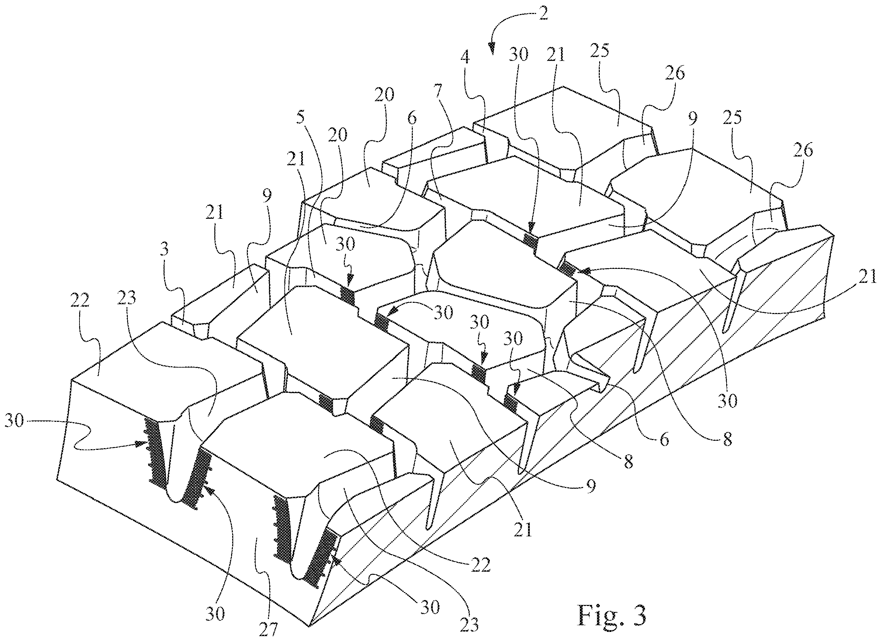

In figure 3 it is shown a portion of a tread band 2 of a tyre. Such a tread band 2 is shown for exemplary and descriptive purposes only, and it is to be understood that the wear indicators 30 according to the present invention may be applied to any kind of tyre, particularly to any kind of tyre for heavy load vehicles, without departing from the scope of protection of the present invention.

For description convenience, hereinafter reference is made to the tread band of figure 3.

The tread band 2, in the example shown in figure 3, comprises one central portion and two shoulder portions.

The central portion, located across the equatorial plane, is visually separated from the shoulder portions by two first circumferential grooves 3, 4.

Moving axially towards the equatorial plane, the tread band has two second circumferential grooves 5, 7, located inwardly relative to the two first circumferential grooves 3, 4, and a third circumferential groove, located inwardly relative to the second circumferential grooves 5, 7 and substantially across the equatorial plane.

In the embodiment shown in figure 3, the tread band 2 has substantially transverse grooves 8, 9, 23, 26, in particular, the central portion is provided with central transverse grooves 8 and 9. The shoulder portions have respective shoulder transverse grooves 23 and 26.

The tread band further has circumferential edges 27.

The intersection between the circumferential grooves and/or circumferential edges and the transverse grooves defines blocks 20, 21, 22, 25.

In the exemplary embodiment, the blocks are substantially lumps of solid rubber defined by and comprising walls W of at least one circumferential groove 3, 4, 5, 6, 7, and/or of at least one edge 27 of the tread band and of at least one transverse groove 8, 9, 23, 26.

In the embodiment shown in figure 3, the central portion has four rows of circumferential blocks, two circumferential rows of lateral blocks 21 and two circumferential rows 10 of central blocks 20.

Moreover, the central blocks 20 of the central circumferential rows are separated from one another in the circumferential direction by central transverse grooves 8 and by the third substantial circumferential row 6, whereas the blocks 21 of the first and second lateral circumferential rows are separated from one another in the circumferential direction by central transverse grooves 9.

In the tread pattern of figure 3, as far as the shoulder portions are concerned, it can be seen that one shoulder portion, namely the shoulder portion on the left of the figure, has one row of shoulder blocks 22 separated from one another by shoulder transverse grooves 23, and, similarly, the remaining shoulder portion has one row of shoulder blocks 25 separated from one another by shoulder transverse grooves 26.

At least one tread band wear indicator 30 is located on at least one of the walls W of a circumferential groove 3, 4, 5, 6, 7 and/or of at least one edge 27 and of at least one substantially transverse groove 8, 9, 23, 26, which define a block 20, 21, 22, 25.

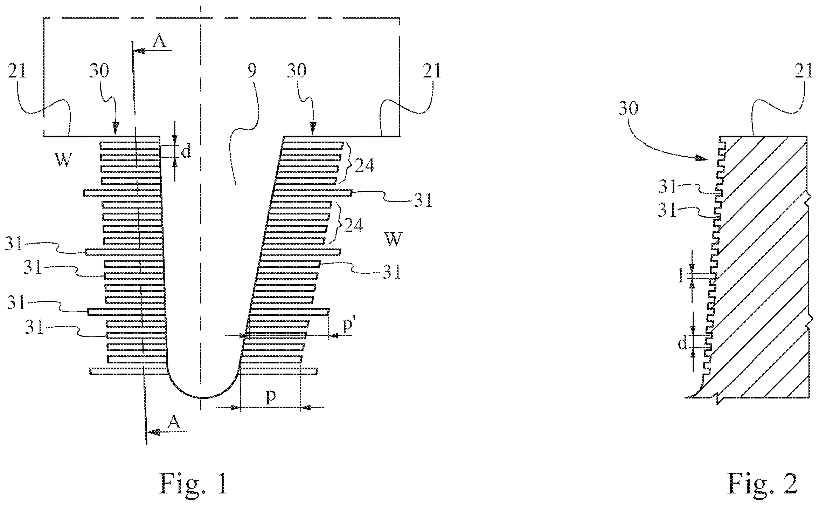

The tread band wear indicator 30, as better shown in figure 1 and figure 2 comprises a plurality of radially superimposed notches 31 extending substantially parallel to one another at a predetermined distance, starting from the radially outermost surface of the block wall.

In the embodiment shown in figure 3 there are several wear indicators 30. For the sake of a simple representation, the wear indicators 30 which are shown are located on walls W of substantially circumferential grooves 3, 4, 5, 6, 7 or of the edge 27, however, for detecting the tread wear in different tread regions it is possible to form wear indicators on any wall W, for example on a wall W of transverse grooves 8, 9, 23, 26.

For the sake of a simple description, reference will be made to a wear indicator 30 located on a wall W of a circumferential groove 3 which axially delimits a block 21, i.e. which axially delimits a block 21 facing the circumferential groove 3, being understood that what will be said is valid for all wear indicators 30 which are possibly present in the tread band 2 and for all walls W of a circumferential groove 3, 4, 5, 6, 7 and/or of an edge 27 and/or of a substantially transverse groove 8, 9, 23, 26.

As better shown in figures 1 and 2, each wear indicator 30 has at least one plurality of radially superimposed notches 31 extending parallel to one another in radial direction, starting from the radially outermost surface of the block 21 which faces the transverse groove 9 with which the wear indicator 30 is associated.

The notches 31 of the same wear indicator 30 are present in radial direction, starting from the radially outermost surface of block 21 by at least 1 cm. The notches 31 of a same indicator 30 are spaced apart from one another by a predetermined distance in radial direction of between about 0,4 mm and about 2 mm. Preferably, of between about 0,4 mm and about 1 mm.

Preferably, such a distance is substantially the same for all notches of at least one wear indicator, thus identifying a pitch d.

In the embodiment of the wear indicator shown in figures 1 and 2, where the notches 31 have a square cross section, the pitch d in radial direction between two adjacent notches 31 is taken for example as the distance between the centre lines of the notches themselves.

However, other shapes for the notches are possible, for example a triangular shape tapering towards the inside of the wall; in this case the pitch d is taken as the distance between two adjacent vertexes.

Preferably, the notches 31 of a same indicator 30 have the a same section maximum width 1 of between about 0,2 mm and about 1 mm. Preferably, of between about 0,2 mm and about 0,5 mm.

Preferably, the notches 31 have an extension p in a direction substantially perpendicular to the radial direction so as to be visible also when portions of the block are removed by wear and/or tearing.

The extension p of the notches 31 is equal to or greater than about 5 mm, preferably between about 6 mm and about 30 mm.

Each notch 31 of a same wear indicator 30 further has a constant depth along its longitudinal extension and all notches 31 of the same indicator 30 have the same depth, leaving out moulding tolerances. Preferably, each notch 31 has a depth of between about 0,3 mm and about 1,6 mm.

As shown in figure 1, in each wear indicator 30 the notches 31 are arranged into groups 24. In detail, a notch 31 with a greater extension p' is interposed between each group 24 of notches, in which all notches 31 have the same longitudinal extension p.

The groups 24 of notches have the same number of notches 31. In other words, by way of example, as shown in figure 1, each group 24 of notches is formed by four notches 31 having the same extension p.

Still referring to figure 3, it can be seen that the circumferential groove 3 has two wear indicators 30, one located on the wall of the groove and/or edge axially delimiting a first block 21, which is delimited in the circumferential direction by the transverse groove 9, and the other located on the wall facing the same circumferential groove 3 axially delimiting the block 21 which is circumferentially adjacent to the first block.

In the embodiment shown in figure 3 it can be seen that for each transverse groove 8, 9, 23, 26 of tyres on which wear (in particular, the saw-tooth wear) is to be detected two wear indicators 30 are provided.

In other words, for each transverse groove 8, 9, 23, 25 at which a first wear indicator 30 is located on a wall W of a block facing a transverse groove 8, 9, 23, 25, a second wear indicator 30 is located on a wall W of the circumferentially adjacent block facing the same transverse groove 8, 9, 23, 26.

Preferably, for each tread band module there are several pairs of wear indicators 30 located axially spaced apart from one another at circumferentially corresponding transverse grooves 8, 9, 23, 26.

In other words, by way of example, it can be seen that in figure 3 a tread band portion is shown which is identified by a module comprising two pairs of wear indicators 30 located on the edge 27 of the tread band 2 at two circumferentially adjacent transverse grooves 23 and one pair of wear indicators 30 located on a transverse groove 9 of the circumferential row of blocks 21 which is axially adjacent. The tread band 2, moving further in the axial direction towards the edge thereof, further comprises two pairs of wear indicators 30 respectively located on two circumferentially adjacent transverse grooves 8 of the circumferential row of blocks 20, and one pair of wear indicators 30 located on a transverse groove 9 of the circumferential row of blocks 21.

In this way it is possible to detect the axial behaviour of the wear, particularly of the wear in pairs of adjacent blocks, in a tread band portion identified by a module, moving from one edge to the opposite one.

The wear indicator 30, by reproducing on the wall of the groove and/or of the edge delimiting the block substantially a metric scale, allows an immediate quantitative detection of the wear which affected the block after a given mileage. Advantageously, the wear indicator is useful for simple and quick checks of the tread wear which can be carried out during a stop of the motor vehicle, without the need of complex devices or to remove the wheel.

Thanks to the wear indicator it is possible to carry out measurements of wear, particularly of saw-tooth wear, directly outdoor, without special equipment.

To this end, a tyre is made which is provided with at least one tread band indicator as described above and the same indicator is located near a transverse groove, in particular on a wall of the circumferential groove or of the tread band edge delimiting at least one of the blocks facing the selected transverse groove.

The tyre considered is then mounted on a vehicle, and, referring to the embodiments shown in figures 3 and 4, on a heavy load vehicle.

Preferably, for making the detection easier, the at least one wear indicator is arranged on the edge of the tread band facing the outside of the vehicle when the tyre is mounted.

As the vehicle is used, its tyres are normally subjected to rolling.

At any time it is possible to evaluate the wear which has affected the radially outer profile of the tread band portion, in the specific case of a block, near which the wear indicator 30 has been located.

It is enough for the user or the person who has to perform the evaluation to observe the tyre for visually detecting the wear of the outer profile of the block on which the tread band wear indicator has been located.

Preferably, for visually detecting the wear of the outer profile of at least one block, the user has to count the number of notches 31 of the tread band wear indicator 30 which are present on the wall of the groove and/or of the edge delimiting the block.

In other words, one counts how many notches 31 of the wear indicator 30 are still present on the wall of the groove and/or of the edge delimiting the block 21 and how many of them have been removed because of the abrasion.

A similar count related to the number of notches 31 which were present originally, i.e. when the tyre was new, allows obtaining directly a measure of the amount of wear which has affected the block 21 on which the wear indicator 30 is located.

To each lacking notch 31 it is in fact associated an amount of wear expressed by the distance d between a notch 31 and the following one in a substantially radial direction.

The visual detection of the wear of the outer profile of at least one block comprising a wear indicator 30 may be carried out by the user or the person who has to carry out the detection with the naked eye, but also with the aid of a camera or video camera.

In this case, counting the number of notches 30 which have been abraded may be carried out by visualizing the taken image on a visualization means, such as a display, integrated with the device that captured the image, or by sending it to a remote computer means, in turn connected with a visualization means. Moreover, the images obtained in this way may be stored in memory devices, such as databases or mass storage devices, for creating historical sequences or more detailed comparative analyses.

Thanks to the wear indicator according to the present invention, as mentioned above, it is also possible to carry out directly outdoor measurements of wear, in particular of saw-tooth wear, without removing the tyre from the rim.

For detecting the saw-tooth wear of two circumferentially adjacent blocks it is necessary, in the step of making the tyre, to locate two wear indicators 30 on a wall W of the circumferential groove and/or of the edge axially delimiting two circumferentially adjacent blocks, at wall portions respectively associated with adjacent blocks and separated by a substantially transverse groove 8, 9, 23, 25.

This method is similar to the method previously described in general terms for one block, with the difference that it is instead evaluated the relative difference between the number of notches 31 of the two circumferentially adjacent wear indicators.

The method according to the present invention can be used also during a design/manufacturing step of a new tread pattern, for quickly examining the effects of tests and performance evaluation trials on the tread wear and possibly intervene with subsequent adjustments on the tread pattern.

In this case, once the tyre has been made as described above, i.e. it has been provided with at least one tread band wear indicator, located at a tread band portion whose wear after a predetermined mileage is to be detected, preferably located on an tread band edge, the same tyre is mounted on a vehicle.

In particular, referring to the embodiments shown in figures 3 and 4, the tyre considered is mounted on a heavy load vehicle.

At this point, the vehicle is put in motion and thus its tyres are made to roll and cover a predetermined mileage on a predetermined route, which may comprise different kind of roads based on the use for which the tyre has been designed.

At the end of the predetermined mileage and/or travelling time, for example four weeks or 10000 km, the tyre is subjected to observation by a design technician, which visually detects the wear of the outer profile of at least one block with which the tread band wear indicator is associated.

The detection is carried out as previously described and the data obtained, after suitable analysis, may provide information on how to modify the tread band pattern for minimizing the rolling wear of that specific tread band portion.

Still in a design/manufacturing step of a new tread pattern, for detecting the saw-tooth wear of two circumferentially adjacent blocks having on their edge walls two wear indicators 30 it is instead evaluated the relative difference in the number of notches 31 which are present on the walls of the two circumferentially adjacent blocks.

In this way it is calculated the difference between the number of notches which are present on a section of the wall W of the circumferential groove and/or of the edge 27 associated with the first block and the number of notches which are present on the section of the wall W of the circumferential groove and/or of the edge 27 associated with the circumferentially adjacent block.

The present invention has been described with reference to some embodiments thereof. Many modifications can be made in the embodiments described in detail, still remaining within the scope of protection of the invention, defined by the following claims.

## Claims

1. Tyre (1) having a tread band (2) provided with at least one tread band portion (20, 21, 22, 25), comprising:
- at least one groove (3, 4, 5, 6, 7) and/or at least one tread band edge (27);
- at least one wall (W) of said at least one tread band edge (27);
- at least one tread band wear indicator (30), located on said at least one wall (W);
- said tread band wear indicator (30) comprises at least a plurality of radially superimposed notches (31) extending substantially parallel to one another at a predetermined distance;
- the notches (31) of a same tread band wear indicator (30) extend in radial direction, starting from the radially outermost surface of the tread band portion (20, 21, 22, 25) on which said tread band wear indicator (30) is located, by at least 1 cm;
- said tread band comprises at least one transverse groove (8, 9, 23, 26) suitable for defining two circumferentially adjacent blocks facing said substantially transverse groove (8, 9, 23, 26);
- the tyre comprising for each of said two circumferentially adjacent blocks at least one tread band wear indicator (30), located on at least one wall (W) of said tread band edge (27) delimiting both blocks of said two circumferentially adjacent blocks.

2. Tyre (1) according to claim 1, wherein said notches (31) are mutually spaced apart radially by a distance (d) of between about 0,4 mm and about 2 mm.

3. Tyre (1) according to claim 2, wherein said notches (31) have a cross section and a section maximum width (1) of between about 0,2 mm and about 1 mm.

4. Tyre (1) according to any one of claims 1 to 3, wherein said notches (31) have a depth of between about 0,3 mm and about 1,6 mm.

5. Tyre (1) according to any one of the previous claims, wherein said notches (31) have an extension (p) in a direction substantially perpendicular to the radial direction equal to or greater than 5 mm.

6. Tyre (1) according to any one of the previous claims, wherein said tread band portion comprises at least one circumferential groove (3, 4, 5, 6, 7) and/or at least one substantially transverse groove (8, 9, 23, 26).

7. Tyre (1) according to any one of the previous claims, wherein said tread band portion comprises at least one block at least partially delimited by said at least one circumferential groove (3, 4, 5, 6, 7) and/or said at least one edge (27) and by said at least one substantially transverse groove (8, 9, 23, 26); said block comprising at least one wall (W) of said at least one circumferential groove (3, 4, 5, 6, 7) and/or substantially transverse (8, 9, 23, 26) and/or of said at least one tread band edge (27) and at least one tread band wear indicator (30), located on said at least one wall (W).

8. Method for detecting the wear of the radially outer profile of at least one tread band portion of a tyre for vehicle wheels, said method comprising:
- making a tyre (1) provided with at least one tread band portion comprising: at least one tread band edge (27); at least one wall (W) of said at least one tread band edge (27); at least one tread band wear indicator (30) located on said at least one wall (W); said tread band wear indicator (30) comprising at least one plurality of radially superimposed notches (31) extending substantially parallel to one another at a predetermined distance;
- said tyre being provided with at least one tread band portion comprising at least one pair of circumferentially adjacent blocks separated by said at least one substantially transverse groove (8, 9, 23, 26) on which both blocks face;
- said tyre comprising for each of said two circumferentially adjacent blocks at least one tread band wear indicator (30), located on at least one wall (W) of said circumferential groove (3, 4, 5, 6, 7) or of said tread band edge (27) delimiting both blocks;
- mounting said tyre (1) on a vehicle;
- making said tyre (1) to roll so as to cover a predetermined mileage;
- visually detecting, by means of said wear indicator (30), the wear of the radially outer profile of said at least one tread band portion;
- visually detecting the wear difference of the outer profile of said pair of circumferentially adjacent blocks.

9. Method for detecting the wear of the radially outer profile of at least one tread band portion of a tyre for vehicle wheels according to claim 8, wherein visually detecting the wear of the outer profile of at least one tread band portion comprises:
- counting the number of notches (31) of the tread band wear indicator (30) which are present on the wall (W) of said at least one edge (27).

## Patentansprüche

1. Reifen (1) mit einem Laufflächenring (2), der mit zumindest einem Laufflächenringabschnitt (20, 21, 22, 25) versehen ist, umfassend:
- zumindest eine Nut (3, 4, 5, 6, 7) und/oder zumindest eine Laufflächenringkante (27);
- zumindest eine Wand (W) der zumindest einen Laufflächenringkante (27);
- zumindest einen Laufflächenring-Verschleißanzeiger (30), der sich an der zumindest einen Wand (W) befindet;
- wobei der Laufflächenring-Verschleißanzeiger (30) zumindest eine Vielzahl von radial überlagerten Kerben (31) umfasst, die sich im Wesentlichen parallel zueinander in einem vorbestimmten Abstand erstrecken;
- die Kerben (31) desselben Laufflächenring-Verschleißanzeigers (30) sich in radialer Richtung ausgehend von der radial äußersten Oberfläche des Laufflächenringabschnitts (20, 21, 22, 25), an welchem sich der Laufflächenring-Verschleißanzeiger (30) befindet, zumindest 1 cm weit erstrecken;
- der Laufflächenring zumindest eine querverlaufende Nut (8, 9, 23, 26) umfasst, die geeignet ist, zwei in Umfangsrichtung benachbarte Blöcke zu definieren, die zu der im Wesentlichen querverlaufenden Nut (8, 9, 23, 26) weisen;
- der Reifen für jeden der zwei in Umfangsrichtung benachbarten Blöcke zumindest einen Laufflächenring-Verschleißanzeiger (30) umfasst, der sich an zumindest einer Wand (W) der Laufflächenringkante (27) befindet, die beide Blöcke der zwei in Umfangsrichtung benachbarten Blöcke begrenzt.

2. Reifen (1) nach Anspruch 1, wobei die Kerben (31) voneinander radial um einen Abstand (d) von zwischen etwa 0,4 mm und etwa 2 mm beabstandet sind.

3. Reifen (1) nach Anspruch 2, wobei die Kerben (31) einen Querschnitt und eine maximale Schnittbreite (1) von zwischen etwa 0,2 mm und etwa 1 mm aufweisen.

4. Reifen (1) nach einem der Ansprüche 1 bis 3, wobei die Kerben (31) eine Tiefe von zwischen etwa 0,3 mm und etwa 1,6 mm aufweisen.

5. Reifen (1) nach einem der vorhergehenden Ansprüche, wobei die Kerben (31) eine Erstreckung (p) in einer Richtung im Wesentlichen senkrecht auf die radiale Richtung gleich oder größer als 5 mm aufweisen.

6. Reifen (1) nach einem der vorhergehenden Ansprüche, wobei der Laufflächenringabschnitt zumindest eine umlaufende Nut (3, 4, 5, 6, 7) und/oder zumindest eine im Wesentlichen querverlaufende Nut (8, 9, 23, 26) umfasst.

7. Reifen (1) nach einem der vorhergehenden Ansprüche, wobei der Laufflächenringabschnitt zumindest einen Block umfasst, der zumindest zum Teil durch die zumindest eine umlaufende Nut (3, 4, 5, 6, 7) und/oder die zumindest eine Kante (27) und durch die zumindest eine im Wesentlichen querverlaufende Nut (8, 9, 23, 26) begrenzt wird; wobei der Block zumindest eine Wand (W) der zumindest einen umlaufenden Nut (3, 4, 5, 6, 7) und/oder der im Wesentlichen querverlaufenden (8, 9, 23, 26) und/oder der zumindest einen Laufflächenringkante (27) sowie zumindest einen Laufflächenring-Verschleißanzeiger (30), der sich an der zumindest einen Wand (W) befindet, umfasst.

8. Verfahren zur Erfassung des Verschleißes des radial äußeren Profils zumindest eines Laufflächenringabschnitts eines Reifens für Fahrzeugräder, wobei das Verfahren umfasst:
- Herstellen eines Reifens (1), der mit zumindest einem Laufflächenringabschnitt versehen ist, umfassend:
zumindest eine Laufflächenringkante (27); zumindest eine Wand (W) der zumindest einen Laufflächenringkante (27); zumindest einen Laufflächenring-Verschleiß-anzeiger (30), der sich an der zumindest einen Wand (W) befindet; wobei der Laufflächenring-Verschleißanzeiger (30) zumindest eine Vielzahl von radial überlagerten Kerben (31) umfasst, die sich im Wesentlichen parallel zueinander in einem vorbestimmten Abstand erstrecken;
- wobei der Reifen mit zumindest einem Laufflächenringabschnitt umfassend zumindest ein Paar von in Umfangsrichtung benachbarten Blöcken versehen ist, die durch die zumindest eine im Wesentlichen querverlaufende Nut (8, 9, 23, 26) getrennt werden, zu welcher beide Blöcke weisen;
- wobei der Reifen für jeden der zwei in Umfangsrichtung benachbarten Blöcke zumindest einen Laufflächenring-Verschleißanzeiger (30) umfasst, der sich an zumindest einer Wand (W) der umlaufenden Nut (3, 4, 5, 6, 7) oder der Laufflächenringkante (27) befindet, die beide Blöcke begrenzt;
- Montieren des Reifens (1) an einem Fahrzeug;
- Rollenlassen des Reifens (1) für eine vorbestimmte Kilometerdistanz;
- visuelles Erfassen des Verschleißes des radial äußeren Profils des zumindest einen Laufflächenringabschnitts mittels des Verschleißanzeigers (30);
- visuelles Erfassen der Verschleißdifferenz des äußeren Profils des Paars von in Umfangsrichtung benachbarten Blöcken.

9. Verfahren zur Erfassung des Verschleißes des radial äußeren Profils zumindest eines Laufflächenringabschnitts eines Reifens für Fahrzeugräder nach Anspruch 8, wobei das visuelle Erfassen des Verschleißes des äußeren Profils des zumindest einen Laufflächenringabschnitts umfasst:
- Zählen der Anzahl von Kerben (31) des Laufflächenring-Verschleißanzeigers (30), die an der Wand (W) der zumindest einen Kante (27) vorhanden sind.

## Revendications

1. Pneu (1) ayant une bande de roulement (2) munie d'au moins une partie de bande de roulement (20, 21, 22, 25), comprenant :
- au moins une rainure (3, 4, 5, 6, 7) et/ou au moins un bord de bande de roulement (27) ;
- au moins une paroi (W) dudit au moins un bord de bande de roulement (27) ;
- au moins un indicateur d'usure de bande de roulement (30), situé sur ladite au moins une paroi (W) ;
- ledit indicateur d'usure de bande de roulement (30) comprend au moins une pluralité d'encoches (31) superposées radialement s'étendant sensiblement parallèlement les unes aux autres à une distance prédéterminée ;
- les encoches (31) d'un même indicateur d'usure de bande de roulement (30) s'étendent dans une direction radiale, à partir de la surface radialement la plus extérieure de la partie de bande de roulement (20, 21, 22, 25) sur laquelle est situé ledit indicateur d'usure de bande de roulement (30), d'au moins 1 cm ;
- ladite bande de roulement comprend au moins une rainure transversale (8, 9, 23, 26) appropriée pour définir deux blocs adjacents circonférentiellement tournés vers ladite rainure sensiblement transversale (8, 9, 23, 26) ;
- le pneu comprenant pour chacun desdits deux blocs adjacents circonférentiellement au moins un indicateur d'usure de bande de roulement (30), situé sur au moins une paroi (W) dudit bord de bande de roulement (27) délimitant les deux blocs desdits deux blocs adjacents circonférentiellement.

2. Pneu (1) selon la revendication 1, dans lequel lesdites encoches (31) sont mutuellement espacées radialement d'une distance (d) comprise entre environ 0,4 mm et environ 2 mm.

3. Pneu (1) selon la revendication 2, dans lequel lesdites encoches (31) ont une coupe transversale et une largeur maximale de section (1) comprise entre environ 0,2 mm et environ 1 mm.

4. Pneu (1) selon l'une quelconque des revendications 1 à 3, dans lequel lesdites encoches (31) ont une profondeur comprise entre environ 0,3 mm et environ 1,6 mm.

5. Pneu (1) selon l'une quelconque des revendications précédentes, dans lequel lesdites encoches (31) ont une extension (p) dans une direction sensiblement perpendiculaire à la direction radiale supérieure ou égale à 5 mm.

6. Pneu (1) selon l'une quelconque des revendications précédentes, dans lequel ladite partie de bande de roulement comprend au moins une rainure circonférentielle (3, 4, 5, 6, 7) et/ou au moins une rainure sensiblement transversale (8, 9, 23, 26).

7. Pneu (1) selon l'une quelconque des revendications précédentes, dans lequel ladite partie de bande de roulement comprend au moins un bloc délimité au moins partiellement par ladite au moins une rainure circonférentielle (3, 4, 5, 6, 7) et/ou ledit au moins un bord (27) et par ladite au moins une rainure sensiblement transversale (8, 9, 23, 26) ; ledit bloc comprenant au moins une paroi (W) de ladite au moins une rainure circonférentielle (3, 4, 5, 6, 7) et/ou sensiblement transversale (8, 9, 23, 26) et/ou dudit au moins un bord de bande de roulement (27) et au moins un indicateur d'usure de bande de roulement (30), situé sur ladite au moins une paroi (W).

8. Procédé de détection de l'usure du profil radialement extérieur d'au moins une partie de bande de roulement d'un pneu pour roues de véhicule, ledit procédé comprenant le fait :
- de fabriquer un pneu (1) muni d'au moins une partie de bande de roulement comprenant : au moins un bord de bande de roulement (27) ; au moins une paroi (W) dudit au moins un bord de bande de roulement (27) ; au moins un indicateur d'usure de bande de roulement (30) situé sur ladite au moins une paroi (W) ; ledit indicateur d'usure de bande de roulement (30) comprenant au moins une pluralité d'encoches (31) superposées radialement s'étendant sensiblement parallèlement les unes aux autres à une distance prédéterminée ;
- ledit pneu étant muni d'au moins une partie de bande de roulement comprenant au moins une paire de blocs adjacents circonférentiellement séparés par ladite au moins une rainure sensiblement transversale (8, 9, 23, 26) sur laquelle les deux blocs sont tournés l'un vers l'autre ;
- ledit pneu comprenant pour chacun desdits deux blocs adjacents circonférentiellement au moins un indicateur d'usure de bande de roulement (30), situé sur au moins une paroi (W) de ladite rainure circonférentielle (3, 4, 5, 6, 7) ou dudit bord de bande de roulement (27) délimitant les deux blocs ;
- de monter ledit pneu (1) sur un véhicule ;
- de faire rouler ledit pneu (1) de manière à couvrir un kilométrage prédéterminé ;
- de détecter visuellement, au moyen dudit indicateur d'usure (30), l'usure du profil radialement extérieur de ladite au moins une partie de bande de roulement ;
- de détecter visuellement la différence d'usure du profil extérieur de ladite paire de blocs adjacents circonférentiellement.

9. Procédé de détection de l'usure du profil radialement extérieur d'au moins une partie de bande de roulement d'un pneu pour roues de véhicule selon la revendication 8, dans lequel la détection visuelle de l'usure du profil extérieur d'au moins une partie de bande de roulement comprend le fait :
- de compter le nombre d'encoches (31) de l'indicateur d'usure de bande de roulement (30) qui sont présentes sur la paroi (W) dudit au moins un bord (27).
